# EUROPEAN PATENT APPLICATION

(11) **EP 4 837 693 A1**
(43) Date of publication of application: **11.11.2026**
(21) Application number: 24930350.4
(22) Date of filing: 21.08.2024
(51) Int. Cl.: B23K 37/00

(54) **METHOD, APPARATUS, AND DEVICE FOR CONTROLLING WELDING DEVICE, STORAGE MEDIUM, AND PROGRAM PRODUCT**

(30) Priority: 19.03.2024 CN 202410309780
(71) Applicant: Contemporary Amperex Technology Co., Limited, Ningde, Fujian 352100 (CN)
(72) Inventor: ZHENG, Zhijian, Ningde, Fujian 352100 (CN); WANG, Dongsheng, Ningde, Fujian 352100 (CN); FAN, Xiang, Ningde, Fujian 352100 (CN); DONG, Huihua, Ningde, Fujian 352100 (CN); MA, Shiwu, Ningde, Fujian 352100 (CN); HONG, Chang, Ningde, Fujian 352100 (CN); ZHOU, Yuqun, Ningde, Fujian 352100 (CN)
(74) Representative: Ziebig Hengelhaupt Intellectual Property Attorneys Patentanwaltskanzlei PartGmbB
(86) International application number: PCT/CN2024/113758
(87) International publication number: WO 2025/194688

(57) **Abstract**

A method for controlling a welding device, the welding device comprising a heat seal controller and a welding head, and the method for controlling a welding device comprising: in response to a battery to be welded being located below the welding device, the heat seal controller acquires the temperature of the welding head before welding; if the heat seal controller is in a normal state before welding, the heat seal controller controls the welding head to be in a heating state; after the welding head completes welding on said battery, the heat seal controller acquires the temperature of the welding head after welding; and, on the basis of the temperature after welding, it is determined whether the heat seal controller is in a normal state after welding. Also provided are an apparatus for controlling a welding device, a device for controlling a welding device, a computer-readable storage medium, and a computer program product. By means of respective corresponding temperatures of the welding head before welding and after welding, it is possible to determine whether the heat seal controller is in a normal state during the whole welding stage, thus reducing situations of a welding seam of a battery being below grade due to a welding device that is in an abnormal state, and thereby lowering the time costs of production and the economic costs of production for battery welding.

## Description

### CROSS-REFERENCE TO RELATED APPLICATIONS

The present disclosure is proposed based on and claims priority to Chinese Patent Application No. 202410309780.1, filed on March 19, 2024 and entitled "METHOD, APPARATUS, AND DEVICE FOR CONTROLLING WELDING DEVICE, STORAGE MEDIUM, AND PROGRAM PRODUCT", which is incorporated herein by reference in its entirety.

### TECHNICAL FIELD

The present disclosure relates to the field of welding device detection technologies, and in particular, to a method, apparatus, and device for controlling a welding device, a storage medium, and a program product.

### BACKGROUND

New energy batteries are increasingly widely applied in life and industry, for example, the field of energy storage and the field of new energy vehicles.

Currently, after a new energy battery is welded through a welding device, whether the welding device is abnormal can be determined only by detecting quality of welds. Consequently, welds of a battery may be unqualified due to an anomaly of the welding device. As a result, a large quantity of abnormal batteries need to be re-welded, resulting in increased time and economic costs.

### SUMMARY

In view of this, embodiments of the present disclosure provide at least a method, apparatus, and device for controlling a welding device, a storage medium, and a program product.

The technical solutions of the embodiments of the present disclosure are implemented as follows:
According to a first aspect, an embodiment of the present disclosure provides a method for controlling a welding device. The welding device includes a heat sealing controller and a welding probe. The welding probe is a heat fusion welding probe. The method for controlling a welding device includes:
obtaining, through the heat sealing controller in response to that a to-be-welded battery is located under the welding device, a temperature of the welding probe before welding;
controlling, through the heat sealing controller when it is determined, based on the temperature before the welding, that the heat sealing controller is in a normal state before the welding, the welding probe to be in a heating state;
obtaining, through the heat sealing controller when the welding probe in the heating state completes welding on the to-be-welded battery, a temperature of the welding probe after the welding; and
determining, based on the temperature after the welding, whether the heat sealing controller is in the normal state after the welding.

It is determined, based on a room temperature range, that the heat sealing controller is in the normal state before the welding and whether the heat sealing controller is in the normal state after the welding.

In this embodiment of the present disclosure, it can be determined, based on the temperature of the welding probe before the welding, whether the heat sealing controller is in a normal state before the welding. Only when the heat sealing controller is in the normal state before the welding, the welding probe is controlled to be in a heating state. In this way, before the welding, it can be determined in advance whether the welding device is abnormal, so that a case in which welds of the battery are unqualified because the battery is welded through the welding device that is abnormal is reduced. Moreover, after welding on the to-be-welded battery is completed, the temperature of the welding probe after the welding is continuously obtained, and it is determined again whether the heat sealing controller is in the normal state after the welding. In this way, it can be determined, based on temperatures respectively corresponding to the welding probe before and after the welding, whether the heat sealing controller is in the normal state throughout the entire welding stage, so that a case in which welds of the battery are unqualified due to the welding device that is in the abnormal state can be greatly reduced, thereby reducing time and economic costs of production for battery welding.

Further, during the welding by the welding probe and after the welding on the to-be-welded battery is completed, the temperature of the welding probe during the welding and the temperature of the welding probe after the welding are continuously obtained correspondingly, and it is determined again whether the heat sealing controller is in the normal state during the welding and after the welding. In this way, it can be determined, based on temperatures respectively corresponding to the welding probe before, during, and after the welding, whether the heat sealing controller is in the normal state throughout the entire welding stage, so that a case in which welds of the battery are unqualified due to the welding device that is in the abnormal state can be greatly reduced, thereby reducing time and economic costs of production for battery welding.

In some embodiments, the welding probe is a heat fusion welding probe. The to-be-welded battery is a bare battery core. The method for controlling a welding device further includes: controlling, through the heat sealing controller when the welding probe is in the heating state, the heat fusion welding probe to separately perform heat fusion welding between an insulating film and a top cover of the bare battery core and between the insulating film and a bottom support of the bare battery core.

In this embodiment of the present disclosure, heat fusion welding can be accurately performed between the insulating film and the top cover of the bare battery core and between the insulating film and the bottom support of the bare battery core through the welding probe in the heating state.

In some embodiments, the obtaining, through the heat sealing controller in response to that a to-be-welded battery is located under the welding device, a temperature of the welding probe before welding includes: sending a temperature acquisition control signal to the heat sealing controller after a first preset time in response to that the to-be-welded battery is located under the welding device, where the temperature acquisition control signal is used for controlling the heat sealing controller to obtain the temperature before the welding; and receiving the temperature before the welding sent by the heat sealing controller.

In this embodiment of the present disclosure, when the to-be-welded battery is located at the welding device, a temperature acquisition control signal is sent to the heat sealing controller after a first preset time. The heat sealing controller can be controlled, based on the temperature acquisition control signal, to obtain the temperature of the welding probe before the welding. In this way, the temperature of the welding probe obtained after the first preset time is more representative of a current state of the heat sealing controller, thereby improving accuracy of determining the heat sealing controller.

In some embodiments, the controlling, through the heat sealing controller when it is determined, based on the temperature before the welding, that the heat sealing controller is in a normal state before the welding, the welding probe to be in a heating state includes: determining, when the temperature before the welding falls within the room temperature range, that the heat sealing controller is in the normal state before the welding; and sending an enabling signal to the heat sealing controller when the heat sealing controller is in the normal state before the welding, where the heat sealing controller is configured to control, in response to the enabling signal, the welding probe to be in the heating state.

In this embodiment of the present disclosure, by determining whether the temperature of the welding probe before the welding falls within the room temperature range, it can be accurately determined whether the heat sealing controller is in the normal state before the welding. Only when the heat sealing controller is in the normal state before the welding, the welding probe can be controlled through the heat sealing controller to be in the heating state. In this way, before the welding, it can be determined in advance whether the welding device is abnormal, so that a phenomenon that welds of the battery are unqualified because the battery is welded through the welding device that is abnormal is reduced, thereby reducing time and economic costs of production.

In some embodiments, the method further includes: obtaining, through the heat sealing controller when the welding probe in the heating state is in a welding process, a temperature of the welding probe during the welding; and the obtaining, through the heat sealing controller when the welding probe in the heating state completes welding on the to-be-welded battery, a temperature of the welding probe after the welding includes: determining, based on the temperature of the welding probe during the welding, whether the heat sealing controller is in the normal state during the welding; and obtaining, through the heat sealing controller when it is determined that the heat sealing controller is in the normal state during the welding, and the welding probe completes welding on the to-be-welded battery, a temperature of the welding probe after the welding.

In this embodiment of the present disclosure, it can be determined, based on the temperature of the welding probe during the welding, whether the heat sealing controller is in the normal state during the welding. When the heat sealing controller is in the normal state during the welding, the welding probe continues performing welding on the to-be-welded battery, and after the welding is completed, the temperature of the welding probe after the welding is obtained, to determine the state of the heat sealing controller after the welding. In this way, a case in which battery welding has poor quality due to an anomaly of the heat sealing controller can be reduced.

In some embodiments, the obtaining, through the heat sealing controller when the welding probe in the heating state is in a welding process, a temperature of the welding probe during the welding includes: obtaining, when the welding probe is in a first stage, a temperature of the welding probe in the first stage through the heat sealing controller, and determining, based on the temperature in the first stage, whether the heat sealing controller is in the normal state, where the first stage is used to represent that the welding probe is already heated, but is not in contact with the to-be-welded battery; controlling, through the heat sealing controller when it is determined that the heat sealing controller is in the normal state, the welding probe to enter a second stage, where the second stage is used to represent that the welding probe is already heated and performs welding on the to-be-welded battery; and obtaining a temperature of the welding probe in the second stage through the heat sealing controller when the welding probe is in the second stage.

In this embodiment of the present disclosure, during welding by the welding probe in the heating state, a temperature (that is, a temperature in a first stage) of the welding probe when the welding probe is not in contact with the to-be-welded battery and a temperature (that is, a temperature in a second stage) of the welding probe when the welding probe performs welding on the to-be-welded battery may be obtained in stages, and the temperature in the second stage is obtained on the premise that it is determined, based on the temperature in the first stage, that the heat sealing controller is in the normal state when the welding probe is in the first stage. In this way, a case of finding that the heat sealing controller is abnormal when the welding probe performs welding on the to-be-welded battery can be minimized, thereby reducing time and economic costs in a battery production process.

In some embodiments, the determining, based on the temperature of the welding probe during the welding, whether the heat sealing controller is in the normal state during the welding includes: determining, when the temperature of the welding probe in the second stage falls within a preset temperature range, that the heat sealing controller is in the normal state during the welding; and the obtaining, through the heat sealing controller when it is determined that the heat sealing controller is in the normal state during the welding, and the welding probe completes welding on the to-be-welded battery, a temperature of the welding probe after the welding includes: sending a temperature acquisition control signal to the heat sealing controller after a second preset time when the heat sealing controller is in the normal state during the welding, and the welding probe does not complete the welding on the to-be-welded battery, where the temperature acquisition control signal is used for controlling the heat sealing controller to obtain the temperature after the welding; and receiving the temperature after the welding sent by the heat sealing controller.

In this embodiment of the present disclosure, by determining whether the temperature of the welding probe in the second stage falls within the preset temperature range, it can be determined whether the heat sealing controller is in the normal state during the welding. In this way, it can be accurately determined, based on the temperature of the welding probe, whether the heat sealing controller is in the normal state during the welding, so that the welding can be stopped timely when the heat sealing controller is abnormal, to reduce a loss of the battery due to damage caused by an anomaly of the heat sealing controller. In addition, when it is determined that the heat sealing controller is in the normal state during the welding, a temperature of the welding probe after cooling for the second preset time can be obtained. In this way, the temperature of the welding probe after the cooling can be accurately obtained, thereby improving accuracy of determining the heat sealing controller.

In some embodiments, the method for controlling a welding device further includes: sending, when the heat sealing controller is in an abnormal state after or during the welding, anomaly alarm information, and obtaining a welding image of the to-be-welded battery; and detecting a welding region in the welding image, to obtain a detection result, where the detection result is used to represent whether there is a defect in the welding region.

In this embodiment of the present disclosure, when the heat sealing controller is in an abnormal state after or during the welding, a welding image of the to-be-welded battery is obtained. A welding region in the welding image is detected, to determine whether there is a defect in the welding region. In this way, the welding quality of the battery is automatically identified by obtaining the welding image, thereby improving production efficiency. Moreover, when the heat sealing controller is in the abnormal state after the welding, anomaly alarm information is sent. In this way, an operator can be prompted timely to perform intervention on the heat sealing controller.

In some embodiments, the detecting a welding region in the welding image, to obtain a detection result, includes: performing incomplete-welding defect detection on the welding region in the welding image when the temperature of the welding probe is lower than a lower limit of a temperature range, to obtain the detection result; and performing over-welding defect detection on the welding region in the welding image when the temperature of the welding probe is higher than an upper limit of the temperature range, to obtain the detection result.

In this embodiment of the present disclosure, a type of a defect detection manner performed on the welding region in the welding image may be selected based on the temperature of the welding probe. When the temperature of the welding probe is less than a lower limit of a temperature range, the welding region in the welding image may be processed in a detection manner for incomplete-welding defect detection. When the temperature of the welding probe is greater than an upper limit of the temperature range, the welding region in the welding image may be processed in a detection manner for over-welding defect detection. In this way, the welding region in the welding image is processed in a detection manner corresponding to the temperature of the welding probe, thereby improving detection accuracy.

According to a second aspect, an embodiment of the present disclosure provides an apparatus for controlling a welding device. The welding device includes a heat sealing controller and a welding probe. The welding probe is a heat fusion welding probe. The apparatus for controlling a welding device includes:
a temperature obtaining unit, configured to: obtain, through the heat sealing controller in response to that a to-be-welded battery is located under the welding device, a temperature of the welding probe before welding;
a control unit, configured to: control, through the heat sealing controller when it is determined, based on the temperature before the welding, that the heat sealing controller is in a normal state before the welding, the welding probe to be in a heating state, where
the temperature obtaining unit is further configured to obtain, through the heat sealing controller when the welding probe in the heating state completes welding on the to-be-welded battery, a temperature of the welding probe after the welding; and
a state determining unit, configured to determine, based on the temperature after the welding, whether the heat sealing controller is in the normal state after the welding.

It is determined, based on a room temperature range, that the heat sealing controller is in the normal state before the welding and whether the heat sealing controller is in the normal state after the welding.

According to a third aspect, an embodiment of the present disclosure provides a device for controlling a welding device, including a memory and a processor. The memory stores a computer program that can be run on the processor. The processor, when executing the program, implements some or all of the steps of the foregoing method.

According to a fourth aspect, an embodiment of the present disclosure provides a computer-readable storage medium, having a computer program stored therein. When executed by a processor, the computer program implements some or all of the steps of the foregoing method.

According to a fifth aspect, an embodiment of the present disclosure provides a computer program product, including a computer program or instructions. The computer program or instructions, when executed by a processor, implement some or all of the steps of the foregoing method.

It should be understood that the foregoing general descriptions and the following detailed descriptions are merely for exemplary and explanatory purposes, and cannot limit the technical solutions of the present disclosure.

### BRIEF DESCRIPTION OF THE DRAWINGS

The accompanying drawings herein are incorporated into the present specification and constitute a part of the present specification. The accompanying drawings show embodiments that conform to the present disclosure, and are used for describing the technical solutions of the present disclosure together with the present specification.
FIG. 1 is a schematic flowchart 1 of implementation of a method for controlling a welding device according to an embodiment of the present disclosure;
FIG. 2 is a schematic flowchart 2 of implementation of a method for controlling a welding device according to an embodiment of the present disclosure;
FIG. 3 is a schematic flowchart 3 of implementation of a method for controlling a welding device according to an embodiment of the present disclosure;
FIG. 4 is a schematic flowchart 4 of implementation of a method for controlling a welding device according to an embodiment of the present disclosure;
FIG. 5 is a schematic flowchart 5 of implementation of a method for controlling a welding device according to an embodiment of the present disclosure;
FIG. 6 is a schematic flowchart 6 of implementation of a method for controlling a welding device according to an embodiment of the present disclosure;
FIG. 7 is a schematic flowchart 7 of implementation of a method for controlling a welding device according to an embodiment of the present disclosure;
FIG. 8 is a schematic flowchart 8 of implementation of a method for controlling a welding device according to an embodiment of the present disclosure;
FIG. 9 is a schematic flowchart 9 of implementation of a method for controlling a welding device according to an embodiment of the present disclosure;
FIG. 10 is a schematic flowchart 10 of implementation of a method for controlling a welding device according to an embodiment of the present disclosure;
FIG. 11 is a schematic diagram of composition of an apparatus for controlling a welding device according to an embodiment of the present disclosure; and
FIG. 12 is a schematic diagram of hardware entities of a device for controlling a welding device according to an embodiment of the present disclosure.

### DETAILED DESCRIPTION

To make the objectives, technical solutions, and advantages of the present application clearer, the following further describes the technical solutions of the present application in detail with reference to the accompanying drawings and the embodiments. The described embodiments are not to be regarded as limitations on the present application. All other embodiments obtained by a person of ordinary skill in the art without creative efforts shall fall within the protection scope of the present application.

In the following descriptions, the term "some embodiments" describes subsets of all possible embodiments, but "some embodiments" may be the same subset or different subsets of all the possible embodiments, and can be combined with each other without conflict.

The included term "first/second/third" is merely intended to distinguish similar objects but does not necessarily indicate a specific order of an object. It may be understood that "first/second/third" is interchangeable in terms of a specific order or sequence if permitted, so that embodiments of the present application described herein can be implemented in a sequence in addition to the sequence shown or described herein.

Unless otherwise defined, all technical and scientific terms used herein have the same meanings as commonly understood by a person skilled in the art to which the present application belongs. Terms used in this specification are merely intended to describe objectives of the present application, but are not intended to limit the present application.

Currently, new energy batteries are increasingly widely used in life and industry. New energy batteries are not only used in energy storage power systems such as hydroelectric power plants, thermal power plants, wind power plants, and solar power plants, but also widely used in electric transportation such as electric bicycles, electric motorcycles, and electric vehicles, as well as aerospace, and many other fields. With continuously increasing application of the power batteries, the market demand for the power batteries is also constantly expanding.

In the embodiments of the present disclosure, the battery may be a cell. A cell refers to a basic unit that can implement mutual conversion between chemical energy and electric energy, and may be used for producing a battery module or a battery pack, to supply power to an electric device. The cell may be a secondary battery. A secondary battery refers to a cell that can be recharged to activate active materials and continue to be used after the cell is discharged. The cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in the embodiments of the present disclosure.

In the embodiments of the present disclosure, the battery may alternatively refer to a single physical module including one or more cells to provide a higher voltage and capacity. When there are a plurality of cells, the plurality of cells are connected in series, in parallel, or in series and parallel by a bus component.

To resolve the technical problem in the related art that a phenomenon that a large quantity of batteries have unqualified welds is caused by determining, by detecting quality of welds after welding, whether a welding device is abnormal, resulting in increased time and economic costs of production, an embodiment of the present disclosure provides a method for controlling a welding device. The method for controlling a welding device may be applied to a heat fusion welding procedure, in which a state of the welding device can be detected by obtaining temperatures of a welding probe in the welding device before, when, and after the welding device performs heat fusion welding on a to-be-welded battery.

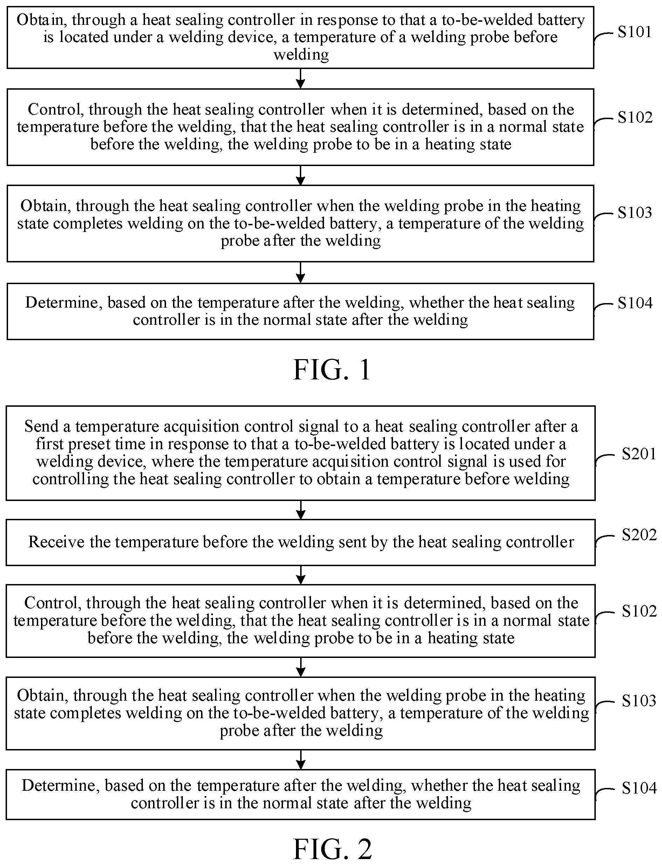

In this embodiment of the present disclosure, the foregoing method for controlling a welding device may be applied to a controller. The controller may be a programmable logic controller (PLC). As shown in FIG. 1, the method includes step S101 to step S104.

Step S101: Obtain, through the heat sealing controller in response to that a to-be-welded battery is located under the welding device, a temperature of the welding probe before welding.

The welding device includes a heat sealing controller and a welding probe. The heat sealing controller is configured to obtain a temperature of the welding probe and control the welding probe to perform welding on the to-be-welded battery. A thermal fuse is arranged inside the welding probe, and the thermal fuse is fused by heating the thermal fuse, to implement heat fusion welding. In some embodiments, a temperature sensor is arranged on the welding probe. The temperature sensor can detect a temperature of the welding probe and transmit the temperature of the welding probe to the heat sealing controller, and then the heat sealing controller can send the temperature to the controller.

In this embodiment of the present disclosure, the welding device is located at a heat fusion welding station, and a position detection apparatus is further arranged at the heat fusion welding station. When the to-be-welded battery is located at the heat fusion welding station, the position detection apparatus may send an in-place signal to the controller, to indicate that the to-be-welded battery is already located under the welding device. In this case, in response to the in-place signal, the controller may obtain, through the heat sealing controller, a temperature of the welding probe before welding.

In some embodiments, the position detection apparatus may be a photoelectric sensor.

Step S102: Control, through the heat sealing controller when it is determined, based on the temperature before the welding, that the heat sealing controller is in a normal state before the welding, the welding probe to be in a heating state.

The temperature of the welding probe before the welding refers to a temperature of the welding probe when the welding probe is not heated yet. In a normal case, the temperature is close to room temperature. However, if a circuit of the heat sealing controller is abnormal, the temperature of the welding probe before the welding may be far higher than the room temperature or far lower than the room temperature. Therefore, by obtaining the temperature of the welding probe before the welding, it can be accurately determined whether the heat sealing controller is in the normal state before the welding.

In some embodiments, if it is determined, based on the temperature before the welding, that the heat sealing controller is in an abnormal state before the welding, alarm information can be directly output. In this way, before the welding, it can be determined in advance that the welding device is abnormal, so that a phenomenon that welds of the battery are unqualified because the battery is welded through the welding device that is abnormal does not occur, thereby reducing time and economic costs of production.

In this embodiment of the present disclosure, when the heat sealing controller is in the normal state before the welding, the welding probe can be controlled through the heat sealing controller to be in the heating state, to continue to perform the welding.

Step S103: Obtain, through the heat sealing controller when the welding probe in the heating state completes welding on the to-be-welded battery, a temperature of the welding probe after the welding.

The temperature of the welding probe after the welding is a temperature of the welding probe after the welding and after completion of cooling. It can be determined, based on the temperature after the welding, whether the welding probe can be cooled normally, to determine whether the heat sealing controller is in the normal state.

In this embodiment of the present disclosure, by determining whether a temperature of the welding probe during the welding falls within a heat fusion temperature range, it can be determined whether the heat sealing controller is in the normal state during the welding. If the temperature of the welding probe during the welding falls within the heat fusion temperature range, it is determined that the heat sealing controller is in the normal state during the welding. If the temperature of the welding probe during the welding does not fall within the heat fusion temperature range, it is determined that the heat sealing controller is in the abnormal state during the welding.

In this embodiment of the present disclosure, when it is determined, based on the temperature during the welding, that the heat sealing controller is in the normal state during the welding, the heat sealing controller controls the welding probe in the heating state to perform welding on the to-be-welded battery, and when it is determined that welding on the to-be-welded battery is completed, after a preset time, the heat sealing controller obtains a temperature of the welding probe after the welding. A reason why the temperature of the welding probe after the welding is obtained after the preset time is that whether the welding probe can be cooled normally needs to be determined based on the temperature of the welding probe after the welding. Therefore, the preset time is a cooling time of the welding probe. Because the welding probe is heated by pulses, the cooling time is very short. For example, the preset time may be 6 seconds.

Step S104: Determine, based on the temperature after the welding, whether the heat sealing controller is in the normal state after the welding.

In this embodiment of the present disclosure, it can be determined, based on the temperature after the welding, whether the welding probe can be cooled normally later. When the welding probe can be cooled normally, it is determined that the heat sealing controller is in the normal state after the welding, and when the welding probe cannot be cooled normally, it is determined that the heat sealing controller is in the abnormal state after the welding. In some embodiments, by determining whether the temperature after the welding falls within a preset temperature range, it can be determined whether the welding probe can be cooled correctly. For example, the preset temperature range may be a room temperature range.

In this embodiment of the present disclosure, it can be determined, based on the temperature of the welding probe before the welding, whether the heat sealing controller is in a normal state before the welding. Only when the heat sealing controller is in the normal state before the welding, the welding probe is controlled to be in a heating state. In this way, before the welding, it can be determined in advance whether the welding device is abnormal, so that a case in which welds of the battery are unqualified because the battery is welded through the welding device that is abnormal is reduced. Moreover, after welding on the to-be-welded battery is completed, the temperature of the welding probe after the welding is continuously obtained, and it is determined again whether the heat sealing controller is in the normal state after the welding. In this way, it can be determined, based on temperatures respectively corresponding to the welding probe before and after the welding, whether the heat sealing controller is in the normal state throughout the entire welding stage, so that a case in which welds of the battery are unqualified due to the welding device that is in the abnormal state can be greatly reduced, thereby reducing time and economic costs of production for battery welding.

In some embodiments, when the foregoing method for controlling a welding device is applied to a procedure of performing heat fusion welding on an insulating film, the foregoing to-be-welded battery is a bare battery core, and the welding probe is a heat fusion welding probe. A process of welding the to-be-welded battery through the welding probe may include: controlling, through the heat sealing controller when the welding probe is in the heating state, the heat fusion welding probe to separately perform heat fusion welding between an insulating film and a top cover of the bare battery core and between the insulating film and a bottom support of the bare battery core.

In some embodiments, the foregoing insulating film may be a mylar film.

In some embodiments, as shown in FIG. 2, step S101 may be implemented through step S201 and step S202.

Step S201: Send a temperature acquisition control signal to the heat sealing controller after a first preset time in response to that the to-be-welded battery is located under the welding device, where the temperature acquisition control signal is used for controlling the heat sealing controller to obtain the temperature before the welding.

Step S202: Receive the temperature before the welding sent by the heat sealing controller.

In this embodiment of the present disclosure, when the to-be-welded battery is located at the welding device, the controller may enable a timer. After a first preset time, the timer prompts the controller. In this case, the controller sends a temperature acquisition control signal to the heat sealing controller. The temperature acquisition control signal can control the heat sealing controller to obtain the temperature of the welding probe before the welding.

In this embodiment of the present disclosure, when the to-be-welded battery is located at the welding device, the temperature of the welding probe before the welding is not obtained immediately, and instead, the temperature is obtained after a delay of the first preset time. This is because when the to-be-welded battery is located at the welding device, the heat sealing controller is still in a standby state, and in this case, it cannot be determined, based on the obtained temperature, whether the welding device is abnormal. Therefore, in this embodiment of the present disclosure, the controller may first send a heat fusion enabling signal to the heat sealing controller. The heat fusion enabling signal can enable the heat sealing controller to be in a heat sealing preparing state. In a normal case, the heat sealing controller does not control heating of the welding probe. Then, the temperature of the welding probe before the welding is obtained after the first preset time. If the heat sealing controller is in the abnormal state, the heat sealing controller may control, when the heat sealing controller is in the standby state, the heating of the welding probe. In this case, the obtained temperature of the welding probe before the welding can be more representative of a current state of the heat sealing controller.

In some embodiments, the first preset time is related to a product type of the to-be-welded battery.

In some embodiments, the temperature sensor on the welding probe can continuously detect a real-time temperature of the welding probe and continuously transmit the real-time temperature of the welding probe to the heat sealing controller. When the to-be-welded battery is located at the welding device, the heat sealing controller sends, based on a time stamp of the received temperature acquisition control signal, a temperature corresponding to the time stamp to the controller. In another embodiment, after receiving the temperature acquisition control signal sent by the controller, the heat sealing controller may send a control instruction to the temperature sensor on the welding probe. The control instruction is used to instruct the temperature sensor to collect a current temperature of the welding probe. Then, the temperature sensor sends the collected temperature to the heat sealing controller. The heat sealing controller then sends the temperature to the controller.

In this embodiment of the present disclosure, when the to-be-welded battery is located at the welding device, a temperature acquisition control signal is sent to the heat sealing controller after a first preset time. The heat sealing controller can be controlled, based on the temperature acquisition control signal, to obtain the temperature of the welding probe before the welding. In this way, the temperature of the welding probe obtained after the first preset time is more representative of a current state of the heat sealing controller, thereby improving accuracy of determining the heat sealing controller.

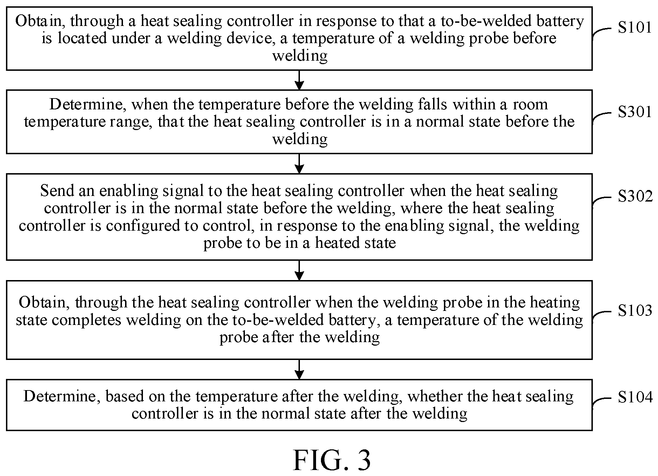

In some embodiments, as shown in FIG. 3, step S102 may be implemented through step S301 and step S302.

Step S301: Determine, when the temperature before the welding falls within the room temperature range, that the heat sealing controller is in the normal state before the welding.

In this embodiment of the present disclosure, by determining whether the temperature of the welding probe before the welding falls within the room temperature range, it can be determined whether the heat sealing controller is in the normal state before the welding. In some embodiments, when the temperature before the welding does not fall within the room temperature range, it is determined that the heat sealing controller is in the abnormal state before the welding. In this case, alarm information can be sent, and it is controlled to disable the heat sealing accurate state of the heat sealing controller.

Step S302: Send an enabling signal to the heat sealing controller when the heat sealing controller is in the normal state before the welding, where the heat sealing controller is configured to control, in response to the enabling signal, the welding probe to be in the heating state.

In this embodiment of the present disclosure, when the heat sealing controller is in a normal state before welding, the heat sealing controller may be controlled to continue to perform a welding work, that is, send an enabling signal to the heat sealing controller. The heat sealing controller is configured to control, in response to the enabling signal, the welding probe to be in a heating state.

In this embodiment of the present disclosure, by determining whether the temperature of the welding probe before the welding falls within the room temperature range, it can be accurately determined whether the heat sealing controller is in the normal state before the welding. Only when the heat sealing controller is in the normal state before the welding, the welding probe can be controlled through the heat sealing controller to be in the heating state. In this way, before the welding, it can be determined in advance whether the welding device is abnormal, so that a phenomenon that welds of the battery are unqualified because the battery is welded through the welding device that is abnormal is reduced, thereby reducing time and economic costs of production.

In some embodiments, the method may further include step 1, and step S103 may be implemented through step 2 and step 3.

Step 1: Obtain, through the heat sealing controller when the welding probe in the heating state is in a welding process, a temperature of the welding probe during the welding.

The welding process refers to a process from a moment at which the welding probe is in a heating state to a moment at which welding is completed. In the welding process, the welding joint is always in the heating state. In a normal case, the temperature of the welding probe during the welding should fall within a heat fusion temperature range. For example, the heat fusion temperature range is approximately 200°C. However, if the heat sealing controller is abnormal, the temperature of the welding joint may be lower or higher than the heat fusion temperature. In this case, when the battery is welded through the welding probe, a welding defect of over-welding or complete-welding is generated. Therefore, the temperature of the welding probe during the welding needs to be obtained, to determine a state of the heat sealing controller during the welding.

In some embodiments, a real-time temperature of the welding probe during the welding may be obtained as a temperature of the welding probe during the welding.

Step 2: Determine, based on the temperature of the welding probe during the welding, whether the heat sealing controller is in the normal state during the welding.

Step 3: Obtain, through the heat sealing controller when it is determined that the heat sealing controller is in the normal state during the welding, and the welding probe completes welding on the to-be-welded battery, a temperature of the welding probe after the welding.

In this embodiment of the present disclosure, by determining whether a temperature of the welding probe during the welding falls within a heat fusion temperature range, it can be determined whether the heat sealing controller is in the normal state. For example, when the temperature of the welding probe during the welding falls within the heat fusion temperature range, it is determined that the heat sealing controller is in the normal state. When the temperature of the welding probe during the welding does not fall within the heat fusion temperature range, it is determined that the heat sealing controller is in the abnormal state. When the heat sealing controller is in the normal state, the welding probe can be controlled, through the heat sealing controller, to perform welding on the to-be-welded battery until the welding probe in the heating state completes the welding on the to-be-welded battery. In this case, a temperature of the welding probe after the welding can be obtained through the heat sealing controller.

In this embodiment of the present disclosure, it can be determined, based on the temperature of the welding probe during the welding, whether the heat sealing controller is in the normal state during the welding. When it is determined, based on the temperature of the welding probe during the welding, that the heat sealing controller is in the normal state during the welding, the welding probe in the heating state continues performing welding on the to-be-welded battery, and after the welding is completed, the temperature of the welding probe after the welding is obtained, to determine the state of the heat sealing controller after the welding. In this way, a case in which battery welding has poor quality due to an anomaly of the heat sealing controller can be reduced.

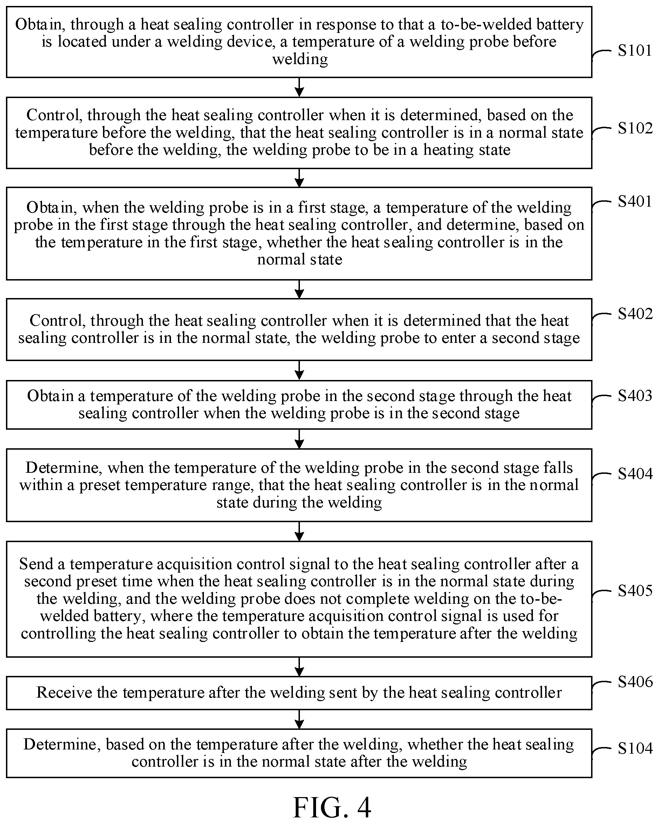

In some embodiments, as shown in FIG. 4, step 1 may be implemented through step S401 to step S403.

Step S401: Obtain, when the welding probe is in a first stage, a temperature of the welding probe in the first stage through the heat sealing controller, and determine, based on the temperature in the first stage, whether the heat sealing controller is in the normal state.

The first stage is used to represent that the welding probe is already heated, but is not in contact with the to-be-welded battery. That is, in the first stage, the thermal fuse in the welding probe is already heated, but is not in contact with the to-be-welded battery, and welding is not performed. In this case, the controller may send a temperature acquisition control signal to the heat sealing controller. The temperature acquisition control signal is used for controlling the heat sealing controller to obtain the temperature of the welding probe in the first stage.

In this embodiment of the present disclosure, the temperature of the welding probe in the first stage refers to a real-time temperature of the welding probe in the first stage. In another embodiment, the temperature of the welding probe in the first stage may alternatively be an average temperature of the welding probe in the first stage.

In this embodiment of the present disclosure, by determining whether the temperature of the welding probe in the first stage falls within a preset temperature range, it can be determined whether the heat sealing controller is in the normal state when the welding probe is in the first stage, and if the temperature of the welding probe in the first stage falls within the preset temperature range, it is determined that the heat sealing controller is in the normal state in the first stage. If the temperature of the welding probe in the first stage does not fall within the preset temperature range, it is determined that the heat sealing controller is in the abnormal state when the welding probe is in the first stage. In some embodiments, if the heat sealing controller is in the abnormal state when the welding probe is in the first stage, alarm information may be sent, and the welding probe is controlled, through the heat sealing controller, to exit the heating state.

Step S402: Control, through the heat sealing controller when it is determined that the heat sealing controller is in the normal state, the welding probe to enter a second stage.

The second stage is used to represent that the welding probe is already heated and performs welding on the to-be-welded battery. In this embodiment of the present disclosure, when the temperature in the first stage falls within the preset temperature range, it is determined that the heat sealing controller is in the normal state. In this case, the heat sealing controller may control the welding probe to enter the second stage, that is, control the welding probe to perform welding on the to-be-welded battery.

Step S403: Obtain a temperature of the welding probe in the second stage through the heat sealing controller when the welding probe is in the second stage.

In this embodiment of the present disclosure, when the welding probe is in the second stage, a temperature acquisition control signal may be sent to the heat sealing controller. The temperature acquisition control signal is used for controlling the heat sealing controller to obtain the temperature of the welding probe in the second stage.

In some embodiments, the temperature of the welding probe in the second stage refers to a real-time temperature of the welding probe in the second stage. This is because, when it is determined, based on the real-time temperature of the welding probe in the second stage, that the heat sealing controller is abnormal, the heat sealing controller can be controlled timely to stop welding.

In this embodiment of the present disclosure, during welding by the welding probe in the heating state, a temperature (that is, a temperature in a first stage) of the welding probe when the welding probe is not in contact with the to-be-welded battery and a temperature (that is, a temperature in a second stage) of the welding probe when the welding probe performs welding on the to-be-welded battery may be obtained in stages, and the temperature in the second stage is obtained on the premise that it is determined, based on the temperature in the first stage, that the heat sealing controller is in the normal state when the welding probe is in the first stage. In this way, a case of finding an anomaly in the heat sealing controller when the welding probe performs welding on the to-be-welded battery can be minimized, thereby reducing time and economic costs in a battery production process.

In some embodiments, as shown in FIG. 4, step 2 may be implemented through step S404, and step 3 may be implemented through step S405 and step S406.

Step S404: Determine, when the temperature of the welding probe in the second stage falls within a preset temperature range, that the heat sealing controller is in the normal state during the welding.

The preset temperature range used for determining whether the welding probe is in the normal state in the second stage may be the same as or different from the preset temperature range used for determining whether the welding probe is in the normal state in the first stage.

In some embodiments, the step of determining whether the heat sealing controller is in the normal state based on the temperature of the welding probe in the second stage is continuously performed from a moment at which the welding probe comes into contact with the to-be-welded battery and a moment at which the welding ends. In this process, it is determined that the temperature of the welding probe in the second stage does not fall within the preset temperature range, and the controller sends alarm information and controls the welding probe to stop welding.

Step S405: Send a temperature acquisition control signal to the heat sealing controller after a second preset time when the heat sealing controller is in the normal state during the welding, and the welding probe does not complete the welding on the to-be-welded battery, where the temperature acquisition control signal is used for controlling the heat sealing controller to obtain the temperature after the welding.

Step S406: Receive the temperature after the welding sent by the heat sealing controller.

In this embodiment of the present disclosure, if the heat sealing controller is always in the normal state when the welding probe is in the second stage, the welding probe can be controlled to complete welding on the to-be-welded battery. After completing the welding, the welding probe may send a completion signal to the controller, or send a completion signal through the heat sealing controller. The controller can enable a timer in response to the completion signal, and send, to the heat sealing controller after the timer passes the second preset time, for controlling the heat sealing controller to obtain a temperature of the welding probe after the welding. A reason why the temperature of the welding probe after the welding is obtained after a delay of the second preset time is that the welding probe needs to be cooled for a specific time after the welding is completed. In the foregoing steps, it is determined that the heat sealing controller is in the normal state in the welding process. In this case, it needs to be determined whether the welding probe can be cooled normally, that is, whether the heat sealing controller is in the normal state after the welding needs to be determined based on the temperature after the welding.

In some embodiments, after the welding probe completes the welding, the controller can send a disabling signal to the heat sealing controller, and the heat sealing controller can control, in response to the disabling signal, the welding probe to be in a non-heating state.

In this embodiment of the present disclosure, by determining whether the temperature of the welding probe in the second stage falls within the preset temperature range, it can be determined whether the heat sealing controller is in the normal state during the welding. In this way, it can be accurately determined, based on the temperature of the welding probe, whether the heat sealing controller is in the normal state during the welding, so that the welding can be stopped timely when the heat sealing controller is abnormal, to reduce a loss of the battery due to damage caused by an anomaly of the heat sealing controller. In addition, when it is determined that the heat sealing controller is in the normal state during the welding, a temperature of the welding probe after cooling for the second preset time can be obtained. In this way, the temperature of the welding probe after the cooling can be accurately obtained, thereby improving accuracy of determining the heat sealing controller.

In some embodiments, step S105 may be implemented in the following manner: when the temperature after the welding falls within the room temperature range, determining that the heat sealing controller is in the normal state after the welding; and when the temperature after the welding does not fall within the room temperature range, determining that the heat sealing controller is in the abnormal state after the welding.

In this embodiment of the present disclosure, because the welding probe is heated by pulses, both a heating time and a cooling time are short. If the heat sealing controller is in the normal state, the welding probe can be cooled to room temperature after the second preset time. Therefore, by determining whether the temperature after the welding falls within the room temperature range, it can be determined whether the heat sealing controller is in the abnormal state after the welding.

In some embodiments, the foregoing method for controlling a welding device may further include: when the temperature of the welding probe in the second stage is lower than a lower limit of the preset temperature range, determining that a welding region in the to-be-welded battery has an incomplete-welding defect; and when the temperature of the welding probe in the second stage is higher than an upper limit of the preset temperature range, determining that the welding region in the to-be-welded battery has an over-welding defect.

In this embodiment of the present disclosure, when the temperature of the welding probe in the second stage is lower than the lower limit of the preset temperature range, it indicates that the welding temperature during the welding on the to-be-welded battery is low. In this case, it can be preliminarily determined that the welding region in the to-be-welded battery has an incomplete-welding defect. Similarly, when the temperature of the welding probe in the second stage is higher than the upper limit of the preset temperature range, it indicates that the welding temperature during the welding on the to-be-welded battery is high. In this case, it can be preliminarily determined that the welding region in the to-be-welded battery has an over-welding defect. Subsequently, a welding image in the to-be-welded battery may be obtained, and then, it is determined, based on the welding image, whether there is an incomplete-welding defect or an over-welding defect in the welding region.

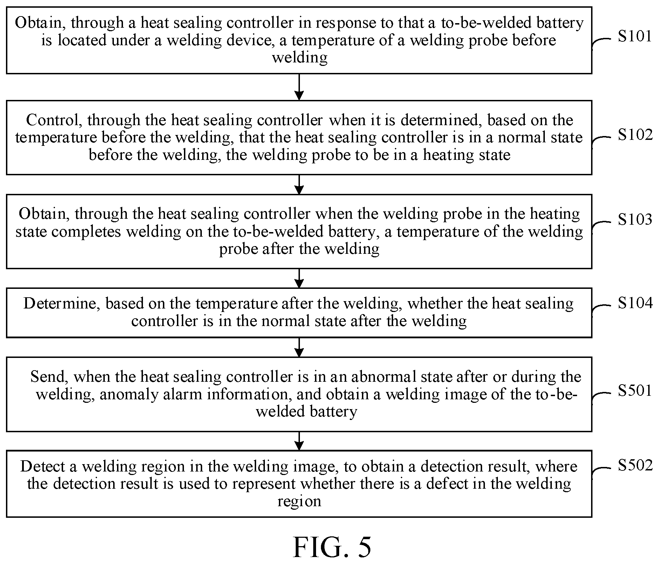

In some embodiments, as shown in FIG. 5, the foregoing method for controlling a welding device may further include step S501 and step S502.

Step S501: Send, when the heat sealing controller is in an abnormal state after or during the welding, anomaly alarm information, and obtain a welding image of the to-be-welded battery.

In this embodiment of the present disclosure, when the heat sealing controller is in an abnormal state after or during the welding, the controller may send anomaly alarm information to a human-machine interface of the welding device, to prompt an operator.

In this embodiment of the present disclosure, when the heat sealing controller is in the abnormal state after the welding, even if the heat sealing controller is in the normal state in the welding process, welds of the battery welded through the heat sealing controller may be abnormal. Therefore, when the heat sealing controller is in an abnormal state after the welding, a welding image of the to-be-welded battery needs to be obtained.

In some embodiments, a camera is arranged in the heat fusion welding procedure, and the camera may be a two-dimensional camera or a three-dimensional camera. When the heat sealing controller is in an abnormal state after or during the welding, the controller may send an image acquisition instruction to the camera, and the camera can photograph the welding region of the battery in response to the image acquisition instruction, to obtain the welding image of the to-be-welded battery.

Step S502: Detect a welding region in the welding image, to obtain a detection result, where the detection result is used to represent whether there is a defect in the welding region.

In this embodiment of the present disclosure, the welding image may be segmented first, to obtain a welding region in the welding image. In some embodiments, the welding image may be segmented through a trained segmentation model, to obtain the welding region in the welding image. The segmentation model may be at least one of the following: a fully convolutional network (FCN), SegNet, DeepLab, and a mask region-based convolutional neural network (Mask R-CNN).

In some embodiments, the welding region in the welding image may be input into a trained classification model, to obtain category information of the welding region, and then, it is determined, based on the category information, whether there is a defect in the welding region. In some embodiments, the classification model may be a binary classification model, that is, first category information representing that there is a defect in the welding region may be output, or second category information representing that there is no defect in the welding region may be output.

In some embodiments, the defect includes at least one of the following: over-welding and incomplete-welding. In this case, the classification model may be a triple classification model. In this case, the triple classification model may output a type of a defect in the welding region.

In some embodiments, a shape feature of the welding region in the welding image may be extracted, and it can be determined, based on the shape feature, whether there is a defect in the welding region. In this embodiment of the present disclosure, when it is determined, based on the shape feature, that there is a significant coarse-grained region in the welding region, it is determined that there is an over-welding defect in the welding region. When it is determined, based on the shape feature, that widths and heights of the welds are uneven, it is determined that there is an incomplete-welding defect in the welding region.

In some embodiments, if the welding region has an incomplete-welding defect, the welding probe may be controlled, through the heat sealing controller, to perform welding on the to-be-welded battery again.

In this embodiment of the present disclosure, when the heat sealing controller is in an abnormal state after or during the welding, a welding image of the to-be-welded battery is obtained. A welding region in the welding image is detected, to determine whether there is a defect in the welding region. In this way, the welding quality of the battery is automatically identified by obtaining the welding image, thereby improving production efficiency.

In some embodiments, step S502 may alternatively be implemented through step S5021 and step S5022.

Step S5021: Perform incomplete-welding defect detection on the welding region in the welding image when the temperature of the welding probe is lower than a lower limit of a temperature range, to obtain the detection result.

Step S5022: Perform over-welding defect detection on the welding region in the welding image when the temperature of the welding probe is higher than an upper limit of the temperature range, to obtain the detection result.

In this embodiment of the present disclosure, a defect detection manner may be determined based on a temperature of the welding probe. When the temperature of the welding probe is lower than a lower limit of the temperature range, it indicates that the temperature of the welding probe during or after the welding is small, and a welding defect of incomplete-welding may be generated. In this case, incomplete-welding defect detection may be performed on the welding region in the welding image, to obtain the detection result. When the temperature of the welding probe is higher than an upper limit of the temperature range, it indicates that the temperature of the welding probe is high during or after the welding, and a welding defect of over-welding may be generated. In this case, over-welding defect detection may be performed on the welding region in the welding image, to obtain the detection result.

In some embodiments, the temperature of the welding probe may be a temperature of the welding probe during the welding, and the temperature of the welding probe during the welding may be a temperature of the welding probe in the second stage. In this case, the temperature range may be the preset temperature range. By comparing the temperature of the welding probe in the second stage and the upper limit and the lower limit of the preset temperature range, the defect detection manner used for the welding region in the welding image when the heat sealing controller is in the abnormal state during the welding is determined.

In some embodiments, the temperature of the welding probe may alternatively be a temperature of the welding probe after the welding. The temperature of the welding probe after the welding may be compared with upper and lower limits of the room temperature range. That is, by comparing the temperature of the welding probe after the welding, and the upper and lower limits of the room temperature range, the defect detection manner used for the welding region in the welding image when the heat sealing controller is in the abnormal state after the welding is determined.

In this embodiment of the present disclosure, a type of a defect detection manner performed on the welding region in the welding image may be selected based on the temperature of the welding probe. When the temperature of the welding probe is less than a lower limit of a temperature range, the welding region in the welding image may be processed in a detection manner for incomplete-welding defect detection. When the temperature of the welding probe is greater than an upper limit of the temperature range, the welding region in the welding image may be processed in a detection manner for over-welding defect detection. In this way, the welding region in the welding image is processed in a detection manner corresponding to the temperature of the welding probe, thereby improving detection accuracy.

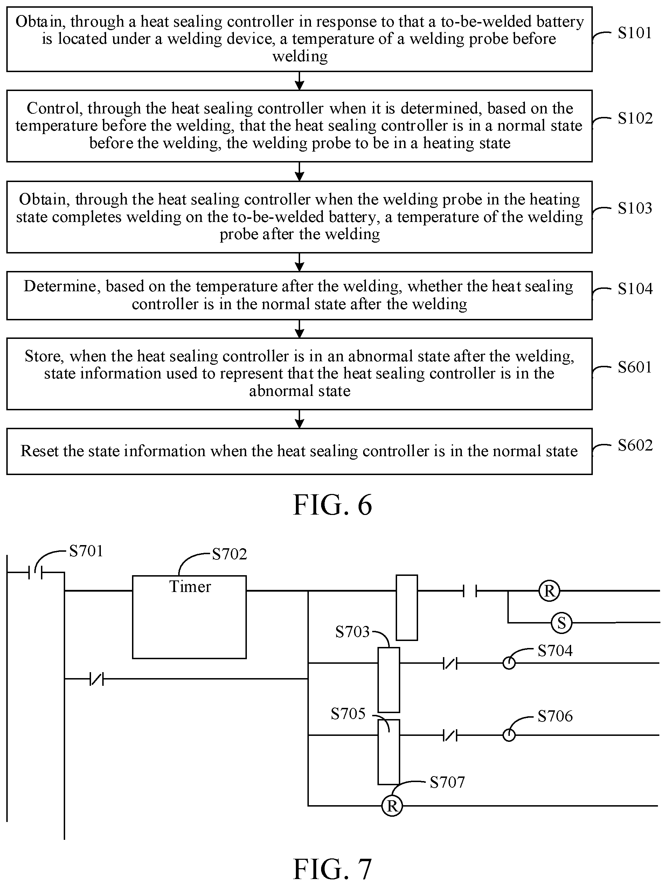

In some embodiments, as shown in FIG. 6, the foregoing method for controlling a welding device may further include step S601 and step S602.

Step S601: When the heat sealing controller is in an abnormal state after the welding, store state information used to represent that the heat sealing controller is in the abnormal state.

In this embodiment of the present disclosure, when the heat sealing controller is in the abnormal state after the welding, state information used to represent that the heat sealing controller is in the abnormal state may be first stored. The state information carries a time stamp of the heat sealing controller being in the abnormal state and anomaly information of the heat sealing controller. The anomaly information may represent temperature information of the heat sealing controller after the welding.

Step S602: Reset the state information when the heat sealing controller is in the normal state.

In this embodiment of the present disclosure, after the operator is informed, through the anomaly alarm information, that the heat sealing controller is in the abnormal state after the welding, the operator can perform manual intervention, and when it is determined that the heat sealing controller is in the normal state, the operator can reset the stored state information, to indicate that the heat sealing controller is in the normal state.

In some embodiments, when the heat sealing controller is in the abnormal state before the welding and when the heat sealing controller is in the abnormal state after the welding, the foregoing step S601 and step S602 may be performed.

In this embodiment of the present disclosure, when the heat sealing controller is in the abnormal state after the welding, anomaly alarm information is sent. In this way, an operator can be prompted timely to perform intervention on the heat sealing controller. State information used to represent that the heat sealing controller is in the abnormal state is stored. The state information is reset when the heat sealing controller is in the normal state. In this way, by storing the state information, anomaly information of the heat sealing controller can be learned of at any time, and when the heat sealing controller is in the normal state, the state information is reset, thereby reducing repeated interventions.

FIG. 7 is a schematic flowchart 7 of implementation of a method for controlling a welding device according to an embodiment of the present disclosure. As shown in FIG. 7, the foregoing method for controlling a welding device may alternatively be implemented by performing step S701 to step S707.

Step S701: Control a heat sealing controller to enable a heat sealing state.

In this embodiment of the present disclosure, when a to-be-welded battery is located under a welding device, a controller may control the heat sealing controller to enable a heat sealing state. The heat sealing controller in the heat sealing state does not control a welding probe to be in a heating state, but enables the heat sealing controller that is in a standby state to change into a heat sealing preparing state.

Step S702: Trigger a timer.

Step S703: After the timer passes a second preset time, obtain a temperature of a welding probe before welding, and compare the temperature before the welding with a first heat-sealing upper temperature limit.

Step S704: Output alarm information when the temperature before the welding is higher than the first heat-sealing upper temperature limit.

Step S705: Compare the temperature before the welding with a first heat-sealing lower temperature limit.

Step S706: Output alarm information when the temperature before the welding is lower than or equal to the first heat-sealing lower temperature limit.

Step S707: Control the heat sealing controller to disable the heat sealing state.

In this embodiment of the present disclosure, before a to-be-welded battery is welded, by obtaining a temperature of a welding probe before welding, it can be determined whether the heat sealing controller is abnormal. When the temperature before the welding exceeds a lower temperature limit and an upper temperature limit, it is determined that the heat sealing controller is abnormal, and alarming is timely performed. In this way, it can be detected, before the welding, whether the heat sealing controller is abnormal, so that a case in which welds of the battery are unqualified due to the welding device that is in the abnormal state is reduced, thereby reducing time and economic costs of production for battery welding.

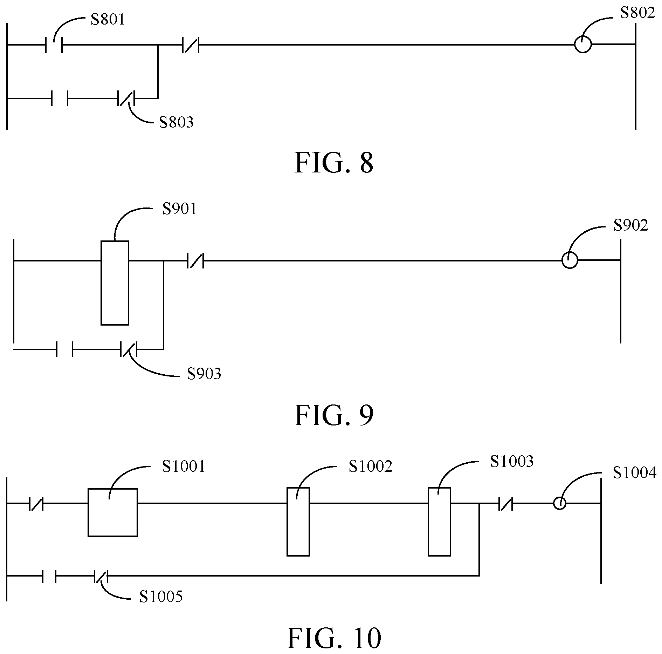

FIG. 8 is a schematic flowchart 8 of implementation of a method for controlling a welding device according to an embodiment of the present disclosure. As shown in FIG. 8, the foregoing method for controlling a welding device may alternatively be implemented by performing step S801 to step S803.

Step S801: Trigger an alarm when a temperature of a welding probe in a heating state when the welding probe is not in contact with a battery is higher than a second heat-sealing upper temperature limit or lower than or equal to a second-heat sealing lower temperature limit.

Step S802: Output alarm information.

Step S803: Store abnormal state information of a heat sealing controller, and reset the abnormal state information after the heat sealing controller restores a normal state.

In this embodiment of the present disclosure, a state of the heat sealing controller can be determined based on a temperature of a welding probe in a heating state when the welding probe is not in contact with a battery, and alarming can be timely performed when it is determined that the heat sealing controller is abnormal. In this way, a case of finding an anomaly in the heat sealing controller when the welding probe performs welding on the to-be-welded battery can be minimized, thereby reducing time and economic costs in a battery production process.

FIG. 9 is a schematic flowchart 9 of implementation of a method for controlling a welding device according to an embodiment of the present disclosure. As shown in FIG. 9, the foregoing method for controlling a welding device may alternatively be implemented by performing step S901 to step S903.

Step S901: Determine whether a temperature of a welding probe in a heating state when the welding probe comes into contact with a battery falls within a heat sealing temperature range.

Step S902: Output alarm information when the temperature of the welding probe in the heating state when the welding probe comes into contact with the battery does not fall within the heat sealing temperature range.

Step S903: Store abnormal state information of a heat sealing controller, and reset the abnormal state information after the heat sealing controller restores a normal state.

In this embodiment of the present disclosure, a state of the heat sealing controller can be determined based on a temperature of a welding probe in a heating state when the welding probe comes into contact with a battery, and alarming can be timely performed when it is determined that the heat sealing controller is abnormal. In this way, it can be accurately determined, based on the temperature of the welding probe, whether the heat sealing controller is in the normal state during the welding, so that the welding can be stopped timely when the heat sealing controller is abnormal, to reduce a loss of the battery due to damage caused by an anomaly of the heat sealing controller.

FIG. 10 is a schematic flowchart 10 of implementation of a method for controlling a welding device according to an embodiment of the present disclosure. As shown in FIG. 10, the foregoing method for controlling a welding device may alternatively be implemented by performing step S1001 to step S1005.

Step S1001: Trigger a timer.

Step S1002: After the timer passes a first preset time, obtain a temperature of a welding probe after welding, and determine whether the temperature of the welding probe after the welding is higher than a third heat-sealing upper temperature limit.

Step S1003: Determine whether the temperature of the welding probe after the welding is lower than the third heat-sealing upper temperature limit.

Step S1004: Output alarm information when the temperature of the welding probe after the welding is higher than the third heat-sealing upper temperature limit or the temperature of the welding probe after the welding is lower than the third heat-sealing upper temperature limit.

Step S1005: Store abnormal state information of a heat sealing controller, and reset the abnormal state information after the heat sealing controller restores a normal state.

In this embodiment of the present disclosure, a state of the heat sealing controller can be determined based on a temperature of a welding probe after welding, and alarming can be timely performed when it is determined that the heat sealing controller is abnormal. In this way, it can be accurately determined, based on the temperature of the welding probe after the welding, whether the heat sealing controller is in the normal state after the welding, so that when the heat sealing controller is abnormal, the welded battery can be checked timely, thereby reducing leakage of poor welding quality.

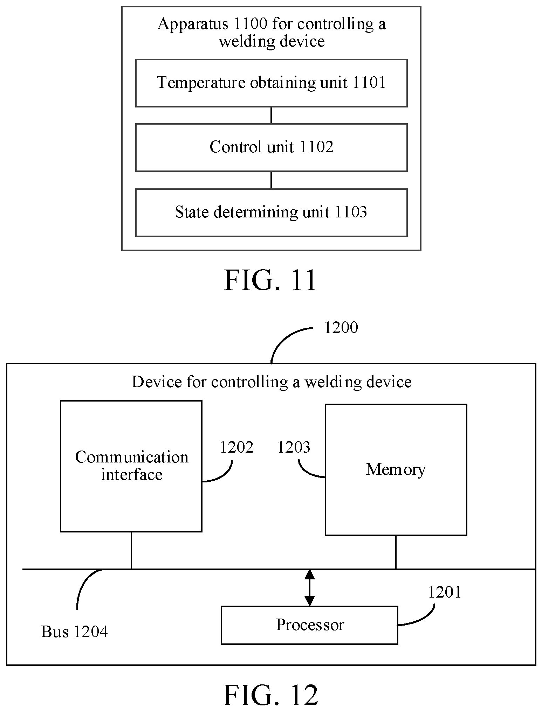

FIG. 11 is a schematic diagram of composition of an apparatus for controlling a welding device according to an embodiment of the present disclosure. As shown in FIG. 11, the apparatus 1100 for controlling a welding device includes: a temperature obtaining unit 1101, a control unit 1102, and a state determining unit 1103.

The temperature obtaining unit is 1101 configured to: obtain, through the heat sealing controller in response to that a to-be-welded battery is located under the welding device, a temperature of the welding probe before welding.

The control unit 1102 is configured to: control, through the heat sealing controller when it is determined, based on the temperature before the welding, that the heat sealing controller is in a normal state before the welding, the welding probe to be in a heating state.

The temperature obtaining unit 1101 is further configured to: obtain, through the heat sealing controller when the welding probe in the heating state completes welding on the to-be-welded battery, a temperature of the welding probe after the welding.

The state determining unit 1103 is configured to determine, based on the temperature after the welding, whether the heat sealing controller is in the normal state after the welding.

In some embodiments, the welding probe is a heat fusion welding probe. The to-be-welded battery is a bare battery core. The control unit 1102 is further configured to: control, through the heat sealing controller when the welding probe is in the heating state, the heat fusion welding probe to separately perform heat fusion welding between an insulating film and a top cover of the bare battery core and between the insulating film and a bottom support of the bare battery core.

In some embodiments, the temperature obtaining unit 1101 is further configured to: send a temperature acquisition control signal to the heat sealing controller after a first preset time in response to that the to-be-welded battery is located under the welding device, where the temperature acquisition control signal is used for controlling the heat sealing controller to obtain the temperature before the welding; and receive the temperature before the welding sent by the heat sealing controller.

In some embodiments, the control unit 1102 is further configured to: determine, when the temperature before the welding falls within the room temperature range, that the heat sealing controller is in the normal state before the welding; and send an enabling signal to the heat sealing controller when the heat sealing controller is in the normal state before the welding, where the heat sealing controller is configured to control, in response to the enabling signal, the welding probe to be in the heating state.

In some embodiments, the temperature obtaining unit 1101 is further configured to: obtain, through the heat sealing controller when the welding probe in the heating state is in a welding process, a temperature of the welding probe during the welding. The state determining unit 1103 is further configured to determine, based on the temperature of the welding probe during the welding, whether the heat sealing controller is in the normal state during the welding. The temperature obtaining unit 1101 is further configured to: obtain, through the heat sealing controller when it is determined that the heat sealing controller is in the normal state during the welding, and the welding probe completes welding on the to-be-welded battery, a temperature of the welding probe after the welding.

In some embodiments, the temperature obtaining unit 1101 is further configured to: obtain, when the welding probe is in a first stage, a temperature of the welding probe in the first stage through the heat sealing controller. The state determining unit 1103 is further configured to determine, based on the temperature in the first stage, whether the heat sealing controller is in the normal state. The first stage is used to represent that the welding probe is already heated, but is not in contact with the to-be-welded battery. The control unit 1102 is further configured to: control, through the heat sealing controller when it is determined that the heat sealing controller is in the normal state, the welding probe to enter a second stage. The second stage is used to represent that the welding probe is already heated and performs welding on the to-be-welded battery. The temperature obtaining unit 1101 is further configured to: obtain a temperature of the welding probe in the second stage through the heat sealing controller when the welding probe is in the second stage.

In some embodiments, the state determining unit 1103 is further configured to: determine, when the temperature of the welding probe in the second stage falls within a preset temperature range, that the heat sealing controller is in the normal state during the welding. The temperature obtaining unit 1101 is further configured to: send a temperature acquisition control signal to the heat sealing controller after a second preset time when the heat sealing controller is in the normal state during the welding, and the welding probe does not complete the welding on the to-be-welded battery, where the temperature acquisition control signal is used for controlling the heat sealing controller to obtain the temperature after the welding; and receive the temperature after the welding sent by the heat sealing controller.

In some embodiments, the apparatus 1100 for controlling a welding device further includes an alarm unit and an image obtaining unit. The alarm unit is configured to: when the heat sealing controller is in the abnormal state after the welding, send anomaly alarm information. The image obtaining unit is configured to: when the heat sealing controller is in the abnormal state after the welding, obtain a welding image of the to-be-welded battery. The defect determining unit is further configured to detect a welding region in the welding image, to determine whether there is a defect in the welding region.

In some embodiments, the defect determining unit is further configured to: perform incomplete-welding defect detection on the welding region in the welding image when the temperature of the welding probe is lower than a lower limit of a temperature range, to obtain the detection result; and perform over-welding defect detection on the welding region in the welding image when the temperature of the welding probe is higher than an upper limit of the temperature range, to obtain the detection result.

The descriptions of the apparatus embodiments are similar to the descriptions of the foregoing method embodiments, and the apparatus embodiments have beneficial effects similar to those of the method embodiments. In some embodiments, functions possessed by or modules included in the apparatus provided in the embodiments of the present disclosure can be configured to perform the method described in the foregoing method embodiments. Refer to descriptions in the method embodiments of the present disclosure for technical details undisclosed in the apparatus embodiments of the present disclosure.

It should be noted that, in the embodiments of the present invention, if implemented in the form of software functional modules and sold or used as an independent product, the data processing method described above may also be stored in a computer-readable storage medium. Based on such an understanding, the technical solutions of the present disclosure essentially, or the part contributing to the prior art, or some or all of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of the present disclosure. The foregoing storage medium includes: any medium that can store program code, such as a USB flash drive, a removable hard disk, a read-only memory (ROM), a magnetic disk, or an optical disc. In this way, the embodiments of the present disclosure are not limited by any specific hardware, software, or firmware, or any combination of hardware, software, and firmware.

An embodiment of the present disclosure provides a computer device, including a memory and a processor. The memory stores a computer program that can be run on the processor. The processor, when executing the program, implements some or all of the steps of the foregoing method.

An embodiment of the present disclosure provides a computer-readable storage medium, having a computer program stored therein. When executed by a processor, the computer program implements some or all of the steps of the foregoing method. The computer readable storage medium may be transitory or non-transitory.

An embodiment of the present disclosure provides a computer program product, including computer-readable code. When the computer-readable code is run in a computer device, a processor in the computer device implements some or all of the steps of the foregoing method.

An embodiment of the present disclosure provides a computer program product. The computer program product includes a non-transitory computer-readable storage medium having a computer program stored therein. The computer program, when read and executed by a computer, implement some or all of the steps of the foregoing method. The computer program product may be specifically implemented through hardware, software, or a combination thereof. In some embodiments, the computer program product is specifically embodied as a computer storage medium. In some other embodiments, the computer program product is specifically embodied as a software product, for example, a software development Kit (SDK).

It should be noted that the foregoing descriptions of the embodiments tend to emphasize the differences between the embodiments. The embodiments may be cross-referenced for identical or similar parts. The descriptions of the device, storage medium, computer program, and computer program product embodiments are similar to the descriptions of the foregoing method embodiments, and the device, storage medium, computer program, and computer program product embodiments have beneficial effects similar to those of the method embodiments. For technical details that are not disclosed in the device, storage medium, computer program, and computer program product embodiments of the present application, refer to the descriptions of the method embodiments of the present application for understanding.

FIG. 12 is a schematic diagram of hardware entities of a device for controlling a welding device according to an embodiment of the present disclosure. As shown in FIG. 12, hardware entities of the device 1200 for controlling a welding device includes: a processor 1201, a communication interface 1202, and a memory 1203.

The processor 1201 generally controls overall operations of the device 1200 for controlling a welding device. The overall operations may be performed to implement the method for controlling a welding device provided in the embodiments of the present disclosure, for example, the methods shown in FIG. 1 to FIG. 10.

The communication interface 1202 may enable the computer device to communicate with other terminals or servers through a network.

The memory 1203 is configured to store instructions and applications that can be executed by the processor 1201, may further buffer data (for example, image data, audio data, voice communication data, and video communication data) to be processed or already processed by the processor 1201 and the modules in the device 1200 for controlling a welding device, and may be implemented by using a flash memory (FLASH) or a random access memory (RAM). Data transmission may be performed between the processor 1201, the communication interface 1202, and the memory 1203 through a bus 1204.

An embodiment of the present disclosure provides a computer storage medium. The computer storage medium has one or more programs stored therein. The one or more programs may be executed by one or more processors, to implement the steps of the method for controlling a welding device according to any one of the foregoing embodiments.

It should be noted herein that the descriptions of the foregoing storage medium and device embodiments are similar to the descriptions of the foregoing method embodiments, and the storage medium and device embodiments have beneficial effects similar to those of the method embodiments. For understanding of technical details that are not disclosed in the storage medium and device embodiments of the present disclosure, refer to the descriptions of the method embodiments of the present disclosure.

The foregoing processor may be at least one of an application-specific integrated circuit (ASIC), a digital signal processor (DSP), a digital signal processing device (DSPD), a programmable logic device (PLD), a field programmable gate array (FPGA), a central processing unit (CPU), a controller, a microcontroller, and a micro processor. It may be understood that the electronic device implementing the functions of the processor may alternatively be other cases. This is not limited in this embodiment of the present disclosure.

The computer storage medium/memory may be a memory such as a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disc, or a compact disc read-only memory (CD-ROM), or may be various terminals including one or any combination of the foregoing memories, for example, a mobile phone, a computer, a tablet device, and a personal digital assistant.

It should be understood that "one embodiment" or "an embodiment" mentioned throughout the present specification means that particular features, structures, or characteristics related to the embodiments are included in at least one embodiment of the present application. Therefore, "in one embodiment" or "in an embodiment" that appears throughout the present specification may not necessarily refer to the same embodiment. In addition, these specific features, structures, or properties may be combined into one or more embodiments in any proper manner. It should be understood that sequence numbers of the foregoing steps/processes do not mean execution sequences in various embodiments of the present application. The execution sequences of the processes should be determined according to functions and internal logic of the steps/processes, and should not be construed as any limitation on the implementation processes of embodiments of the present application. The sequence numbers of the foregoing embodiments of the present application are merely for description purpose, and do not indicate the preference among the embodiments.

It should be noted that terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or device. Without more limitations, elements defined by a sentence "including one" does not exclude that there are still other same elements in the process, method, object, or apparatus.

The foregoing descriptions are merely implementations of the present application, but are not intended to limit the protection scope of the present application. Any variation or replacement readily figured out by a person skilled in the art within the technical scope disclosed in the present application shall fall within the protection scope of the present application.

## Claims

1. A method for controlling a welding device, the welding device comprising a heat sealing controller and a welding probe, the welding probe being a heat fusion welding probe, the method for controlling a welding device comprising:
obtaining, through the heat sealing controller in response to that a to-be-welded battery is located under the welding device, a temperature of the welding probe before welding;
controlling, through the heat sealing controller when it is determined, based on the temperature before the welding, that the heat sealing controller is in a normal state before the welding, the welding probe to be in a heating state;
obtaining, through the heat sealing controller when the welding probe in the heating state completes welding on the to-be-welded battery, a temperature of the welding probe after the welding; and
determining, based on the temperature after the welding, whether the heat sealing controller is in the normal state after the welding, wherein
it is determined, based on a room temperature range, that the heat sealing controller is in the normal state before the welding and whether the heat sealing controller is in the normal state after the welding.

2. The method for controlling a welding device according to claim 1, wherein the to-be-welded battery is a bare battery core; and the method for controlling a welding device further comprises:
controlling, through the heat sealing controller when the welding probe is in the heating state, the heat fusion welding probe to separately perform heat fusion welding between an insulating film and a top cover of the bare battery core and between the insulating film and a bottom support of the bare battery core.

3. The method for controlling a welding device according to claim 1 or 2, wherein the obtaining, through the heat sealing controller in response to that a to-be-welded battery is located under the welding device, a temperature of the welding probe before welding comprises:
sending a temperature acquisition control signal to the heat sealing controller after a first preset time in response to that the to-be-welded battery is located under the welding device, wherein the temperature acquisition control signal is used for controlling the heat sealing controller to obtain the temperature before the welding; and
receiving the temperature before the welding sent by the heat sealing controller.

4. The method for controlling a welding device according to claim 3, wherein the controlling, through the heat sealing controller when it is determined, based on the temperature before the welding, that the heat sealing controller is in a normal state before the welding, the welding probe to be in a heating state comprises:
determining, when the temperature before the welding falls within the room temperature range, that the heat sealing controller is in the normal state before the welding; and
sending an enabling signal to the heat sealing controller when the heat sealing controller is in the normal state before the welding, wherein the heat sealing controller is configured to control, in response to the enabling signal, the welding probe to be in the heating state.

5. The method for controlling a welding device according to claim 4, wherein the method further comprises:
obtaining, through the heat sealing controller when the welding probe in the heating state is in a welding process, a temperature of the welding probe during the welding; and
the obtaining, through the heat sealing controller when the welding probe in the heating state completes welding on the to-be-welded battery, a temperature of the welding probe after the welding comprises:
determining, based on the temperature of the welding probe during the welding, whether the heat sealing controller is in the normal state during the welding; and
obtaining, through the heat sealing controller when it is determined that the heat sealing controller is in the normal state during the welding, and the welding probe completes welding on the to-be-welded battery, a temperature of the welding probe after the welding.

6. The method for controlling a welding device according to claim 5, wherein the obtaining, through the heat sealing controller when the welding probe in the heating state is in a welding process, a temperature of the welding probe during the welding comprises:
obtaining, when the welding probe is in a first stage, a temperature of the welding probe in the first stage through the heat sealing controller, and determining, based on the temperature in the first stage, whether the heat sealing controller is in the normal state, wherein the first stage is used to represent that the welding probe is already heated, but is not in contact with the to-be-welded battery;
controlling, through the heat sealing controller when it is determined that the heat sealing controller is in the normal state, the welding probe to enter a second stage, wherein the second stage is used to represent that the welding probe is already heated and performs welding on the to-be-welded battery; and
obtaining a temperature of the welding probe in the second stage through the heat sealing controller when the welding probe is in the second stage.

7. The method for controlling a welding device according to claim 6, wherein the determining, based on the temperature of the welding probe during the welding, whether the heat sealing controller is in the normal state during the welding comprises:
determining, when the temperature of the welding probe in the second stage falls within a preset temperature range, that the heat sealing controller is in the normal state during the welding; and
the obtaining, through the heat sealing controller when it is determined that the heat sealing controller is in the normal state during the welding, and the welding probe completes welding on the to-be-welded battery, a temperature of the welding probe after the welding comprises:
sending a temperature acquisition control signal to the heat sealing controller after a second preset time when the heat sealing controller is in the normal state during the welding, and the welding probe does not complete the welding on the to-be-welded battery, wherein the temperature acquisition control signal is used for controlling the heat sealing controller to obtain the temperature after the welding; and
receiving the temperature after the welding sent by the heat sealing controller.

8. The method for controlling a welding device according to claim 7, wherein the method for controlling a welding device further comprises:
sending, when the heat sealing controller is in an abnormal state after or during the welding, anomaly alarm information, and obtaining a welding image of the to-be-welded battery; and
detecting a welding region in the welding image, to obtain a detection result, wherein the detection result is used to represent whether there is a defect in the welding region.

9. The method for controlling a welding device according to claim 8, wherein the detecting a welding region in the welding image, to obtain a detection result, comprises:
performing incomplete-welding defect detection on the welding region in the welding image when the temperature of the welding probe is lower than a lower limit of a temperature range, to obtain the detection result; and
performing over-welding defect detection on the welding region in the welding image when the temperature of the welding probe is higher than an upper limit of the temperature range, to obtain the detection result.

10. An apparatus for controlling a welding device, the welding device comprising a heat sealing controller and a welding probe, the welding probe being a heat fusion welding probe, the apparatus for controlling a welding device comprising:
a temperature obtaining unit, configured to: obtain, through the heat sealing controller in response to that a to-be-welded battery is located under the welding device, a temperature of the welding probe before welding;
a control unit, configured to: control, through the heat sealing controller when it is determined, based on the temperature before the welding, that the heat sealing controller is in a normal state before the welding, the welding probe to be in a heating state, wherein
the temperature obtaining unit is further configured to: obtain, through the heat sealing controller when the welding probe in the heating state completes welding on the to-be-welded battery, a temperature of the welding probe after the welding; and
a state determining unit, configured to determine, based on the temperature after the welding, whether the heat sealing controller is in the normal state after the welding, wherein
it is determined, based on a room temperature range, that the heat sealing controller is in the normal state before the welding and whether the heat sealing controller is in the normal state after the welding.

11. The apparatus for controlling a welding device according to claim 10, wherein the to-be-welded battery is a bare battery core; and
the control unit is configured to: control, through the heat sealing controller when the welding probe is in the heating state, the heat fusion welding probe to separately perform heat fusion welding between an insulating film and a top cover of the bare battery core and between the insulating film and a bottom support of the bare battery core.

12. The apparatus for controlling a welding device according to claim 11, wherein
the temperature obtaining unit is further configured to: send a temperature acquisition control signal to the heat sealing controller after a first preset time in response to that the to-be-welded battery is located under the welding device, wherein the temperature acquisition control signal is used for controlling the heat sealing controller to obtain the temperature before the welding; and receive the temperature before the welding sent by the heat sealing controller.

13. The apparatus for controlling a welding device according to claim 12, wherein
the control unit is further configured to: determine, when the temperature before the welding falls within the room temperature range, that the heat sealing controller is in the normal state before the welding; and send an enabling signal to the heat sealing controller when the heat sealing controller is in the normal state before the welding, wherein the heat sealing controller is configured to control, in response to the enabling signal, the welding probe to be in the heating state.

14. The apparatus for controlling a welding device according to claim 13, wherein
the temperature obtaining unit is further configured to: obtain, through the heat sealing controller when the welding probe in the heating state is in a welding process, a temperature of the welding probe during the welding; determine, based on the temperature of the welding probe during the welding, whether the heat sealing controller is in the normal state during the welding; and obtain, through the heat sealing controller when it is determined that the heat sealing controller is in the normal state during the welding, and the welding probe completes welding on the to-be-welded battery, a temperature of the welding probe after the welding.

15. The apparatus for controlling a welding device according to claim 14, wherein
the temperature obtaining unit is further configured to: obtain, when the welding probe is in a first stage, a temperature of the welding probe in the first stage through the heat sealing controller, and determine, based on the temperature in the first stage, whether the heat sealing controller is in the normal state, wherein the first stage is used to represent that the welding probe is already heated, but is not in contact with the to-be-welded battery; control, through the heat sealing controller when it is determined that the heat sealing controller is in the normal state, the welding probe to enter a second stage, wherein the second stage is used to represent that the welding probe is already heated and performs welding on the to-be-welded battery; and obtain a temperature of the welding probe in the second stage through the heat sealing controller when the welding probe is in the second stage.

16. The apparatus for controlling a welding device according to claim 15, wherein
the state determining unit is further configured to: determine, when the temperature of the welding probe in the second stage falls within a preset temperature range, that the heat sealing controller is in the normal state during the welding; and
that the temperature of the welding probe after the welding is obtained through the heat sealing controller when it is determined that the heat sealing controller is in the normal state during the welding, and the welding probe completes the welding on the to-be-welded battery comprises:
the temperature obtaining unit is further configured to: send a temperature acquisition control signal to the heat sealing controller after a second preset time when the heat sealing controller is in the normal state during the welding, and the welding probe does not complete the welding on the to-be-welded battery, wherein the temperature acquisition control signal is used for controlling the heat sealing controller to obtain the temperature after the welding; and receive the temperature after the welding sent by the heat sealing controller.

17. The apparatus for controlling a welding device according to claim 16, wherein the apparatus for controlling a welding device further comprises an alarm unit and an image obtaining unit, wherein
the alarm unit is configured to: send, when the heat sealing controller is in an abnormal state after or during the welding, anomaly alarm information, and obtain a welding image of the to-be-welded battery; and
the image obtaining unit is configured to detect a welding region in the welding image, to obtain a detection result, wherein the detection result is used to represent whether there is a defect in the welding region.

18. A device for controlling a welding device, comprising:
a memory, configured to store executable instructions; and
a processor, configured to: when executing the executable instructions stored in the memory, implement the steps in the method for controlling a welding device according to any one of claims 1 to 9.

19. A computer-readable storage medium, having executable instructions stored therein, and the executable instruction, when executed by a processor, implementing the steps in the method for controlling a welding device according to any one of claims 1 to 9.

20. A computer program product, comprising a computer program or instructions, the computer program or the instructions, when executed by a processor, implementing the steps in the method for controlling a welding device according to any one of claims 1 to 9.
